# EUROPÄISCHE PATENTSCHRIFT

(11) **EP 1 927 493 B1**
(45) Veröffentlichungstag und Bekanntmachung des Hinweises auf die Patenterteilung: **23.05.2012**
(21) Anmeldenummer: 07021229.5
(22) Anmeldetag: 31.10.2007
(51) Int. Cl.: B60J 7/12

(54) **Spriegelanordnung für ein Cabriolet-Fahrzeug**
Bow for a convertible vehicle
Arceau pour un véhicule cabriolet

(30) Priorität: 01.12.2006 DE 202006018235 U
(43) Veröffentlichungstag der Anmeldung: 04.06.2008
(73) Patentinhaber: Wilhelm Karmann GmbH, 49084 Osnabrück (DE)
(72) Erfinder: Wesemann, Michael, 49565 Bramsche (DE)
(74) Vertreter: Kronthaler, Schmidt & Coll.

(56) Entgegenhaltungen:
- EP-A- 0 572 709
- EP-A- 1 092 575
- DE-A1- 10 113 101
- DE-U1- 20 118 834
- DE-U1- 29 702 421

## Beschreibung

Die Erfindung betrifft ein Cabriolet-Fahrzeug mit den Merkmalen des Oberbegriffes von Anspruch 1.

Aus der gattungsgemäßen EP 0 572 709 A1 ist ein Cabriolet-Fahrzeug mit einer Verbindungselemente aufweisenden Abstandsstruktur eines Himmel bekannt, wobei der Himmel über die Verbindungselemente an Spriegeln eines Verdecks anordenbar ist. Zur Anbindung der Abstandsstruktur des Himmels an die Verbindungselemente weisen die Verbindungselemente Rastaufnahmen oder eine Ausnehmung auf.

In der DE 297 02 421 U1 ist ein Cabriolet-Fahrzeug beschrieben, dessen Verdeckgestell quer zu einer Fahrzeuglängsachse verlaufende Dachspriegel aufweist. Die Dachspriegel sind als einstückige, mehrkammrige Hohlprofilteile ausgebildet, wobei diese zumindest zwei ringförmige Aufnahmekammern mit jeweils wenigstens einem Aufnahmeschlitz aufweisen. In den Aufnahmeschlitzen können beispielsweise eine Postermatte oder ein Verdeckbezug angeordnet werden.

Die DE 4 039 888 A1 offenbart ein weiteres Cabriolet-Verdeck.

Gegenüber dem Stand der Technik ist es Aufgabe der Erfindung, ein Cabriolet-Fahrzeug zu schaffen, bei dem ein Befestigungsprofil für unterschiedliche Verdecksituationen verwendet werden kann.

Die Aufgabe wird gelöst durch einen Gegenstand nach dem Oberbegriff des Anspruchs 1, der sich dadurch auszeichnet, dass Befestigungsprofil zumindest in zwei Positionen an dem Spriegel anordenbar ist, so dass weitere oder dieselben Verdeckteile alternativ an dem Befestigungsprofil anbringbar sind. Als Verdeckteil, das mittels des Aufnahmekanals, der sich entlang des Befestigungsprofils und damit entlang des Spriegels erstreckt, festlegbar ist, kommt insbesondere ein Verdeckbezug, eine Polstermatte, ein Verdeckhimmel oder eine Spriegelabdeckung in Frage. Es versteht sich, dass das Befestigungsprofil hierfür entsprechend hart ausgebildet ist. Beispielsweise wird ein Polypropylen verwendet.

In den Aufnahmekanal, der zumindest teilweise, vorteilhafterweise insgesamt entlang seiner Längserstreckung geöffnet ist, sind die an dem Spriegel festzulegenden Teile einzubringen.

Die Öffnung erstreckt sich zwischen gegenüberliegenden Wandungen des Kanals und in Richtung der Längserstreckung des Aufnahmekanals. Die Festlegung selbst erfolgt beispielsweise durch Einhängen, Einspannen oder Eingreifen in den Kanal. Alternativ und/oder ergänzend zu einer durch die Öffnung zumindest teilweise hindurch in den Kanal hinein erfolgenden Festlegung ist auch ein Einschieben eines Befestigungsteils von einem offenen der zwei Enden des Aufnahmekanals denkbar.

Der Aufnahmekanal des Befestigungsprofils verjüngt sich vorteilhafterweise zu seiner Öffnung hin, so dass er sich zur Aufnahme von häufig bei Cabriolet-Fahrzeugen verwendeten Kedern eignet. Diese können in den oder die Aufnahmekanäle entweder bei der Montage seitlich eingeschoben oder auch durch die sich entlang der Längserstreckung des Befestigungsprofils erstreckende Öffnung hindurch eingeklipst werden, sofern die Materialeigenschaften des Keders bzw. des Aufnahmekanals dieses zulassen.

Das Befestigungsprofil eines erfindungsgemäßen Cabriolet-Fahrzeuges kann beispielsweise als extrudiertes Kunststoffprofil hergestellt werden und lässt sich vorteilhafterweise an einem runden, üblicherweise aus einem Metallwerkstoff bestehenden Spriegel anbringen. Die im Stand der Technik bekannten, häufig mit Aufnahmekanälen versehenen und entsprechend aufwendig herzustellenden Spriegel können durch einfachere Spriegel ersetzt werden, auf die das Befestigungsprofil aufgesetzt wird. Die Aufnahmekanäle werden von den einfacher herzustellenden Kunststoffprofilen gebildet. Diese Herstellung ist kostengünstiger und kann in Abhängigkeit der Werkstoffe dazu führen, dass das gesamte Verdeck leichter baut.

Zur Festlegung an einem im wesentlichen runden Spriegel ist das Befestigungsprofil hierzu mit einer teilweise komplementären Innenseite ausgebildet. Je nach gewünschter Stabilität des Spriegels bzw. der gewünschten Anlage von Spriegel und Befestigungsprofil weist dieses entsprechend bogenförmige Segmente oder gegebenenfalls anders ausgebildete Anlagebereiche auf. Für die Verbindung von Spriegel und Befestigungsprofil kann es hierbei von Vorteil sein, zwischen Spriegel und Profil eine Zwischenlage in Form von Klebepads aus doppelseitigem Klebeband oder auch Schaumpads, die aus doppelseitigem Klebeband mit einer Zwischenlage aus beispielsweise Moosgummi versehen sind, vorzusehen. Es ist ebenfalls vorstellbar, die Spriegel über Blindnieten mit dem Befestigungsprofil zu verbinden.

Vorteilhafterweise ist das Befestigungsprofil als Klemmprofil ausgebildet, das bereits aufgrund seiner Klemmkraft sicher an dem Spriegel festliegt. Auch eine zusätzliche Befestigung in Form von Klebungen oder Nieten liegt im Rahmen der Erfindung.

Bei einem erfindungsgemäßen Cabriolet-Fahrzeug ist es weiterhin von Vorteil, dass das als Klemmprofil ausgebildete Befestigungsprofil der Festlegung einer zwischen Spriegel und Klemmprofil angeordneten Fahne bzw. Verdeckanbindung dient. So ist durch die Verwendung des Befestigungsprofils eine zusätzliche Anbindungsmöglichkeit geschaffen, Verdeckteile festzulegen. Die Fahne kann gegebenenfalls als Klebeverbindung zwischen Spriegel und Befestigungsprofil verwendet werden.

Weitere Vorteile und Einzelheiten der Erfindung ergeben sich aus den nachfolgend beschriebenen, schematischen Abbildungen. Es zeigt:
- Fig. 1: ein erfindungsgemäßes Cabriolet-Fahrzeug in perspektivischer Ansicht,

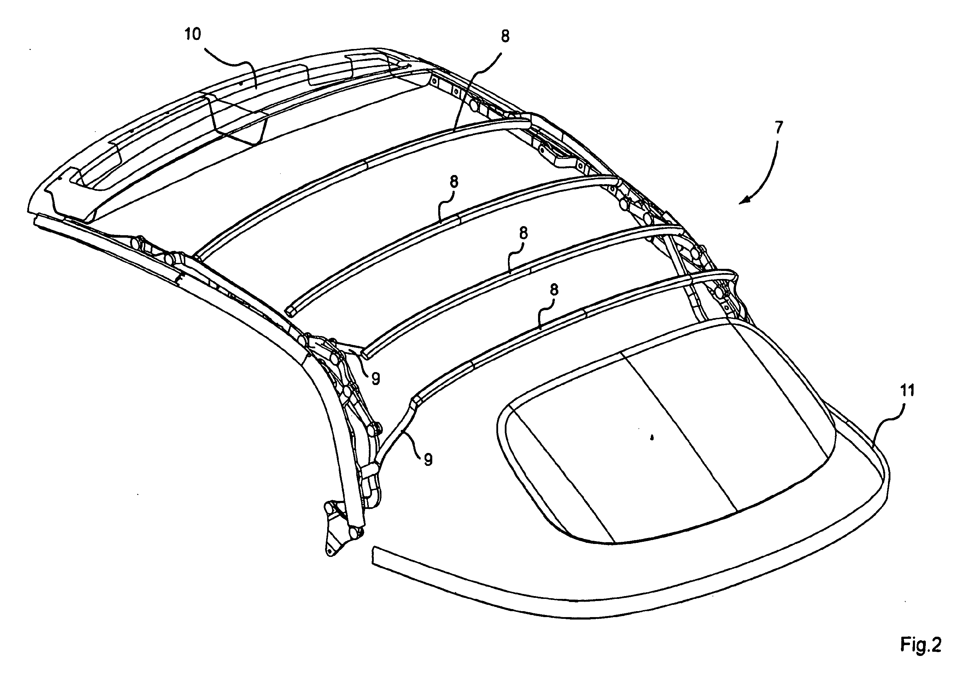

- Fig. 2: einen Teil des Verdecks des erfindungsgemäßen Cabriolet-Fahrzeugs in perspektivischer Ansicht,
- Fig. 3: einen Längsschnitt durch einen Teil des Verdecks mit Spriegel und Befestigungsprofil,
- Fig. 4: den Gegenstand nach Fig. 3 in anderer Anordnung und mit Polstermatte,
- Fig. 5: den Gegenstand nach Fig. 3 mit einem anders ausgebildeten Befestigungsprofil,
- Fig. 6: den Gegenstand nach Fig. 5 in einer Anordnung mit Polstermatte,
- Fig. 7: einen Längsschnitt durch einen Teil des Verdecks eines erfindungsgemäßen Cabriolet-Fahrzeugs in einer Anordnung ohne Verdeckhimmel und
- Fig. 8: den Gegenstand nach Fig. 7 mit einem zusätzlichen Abdeckprofil,
- Fig. 9: den Gegenstand nach Fig. 3 mit einem anders ausgebildeten Befestigungsprofil.

In den Figuren sind gleichwirkende Teile, sofern dienlich, mit identischen Ziffern versehen.

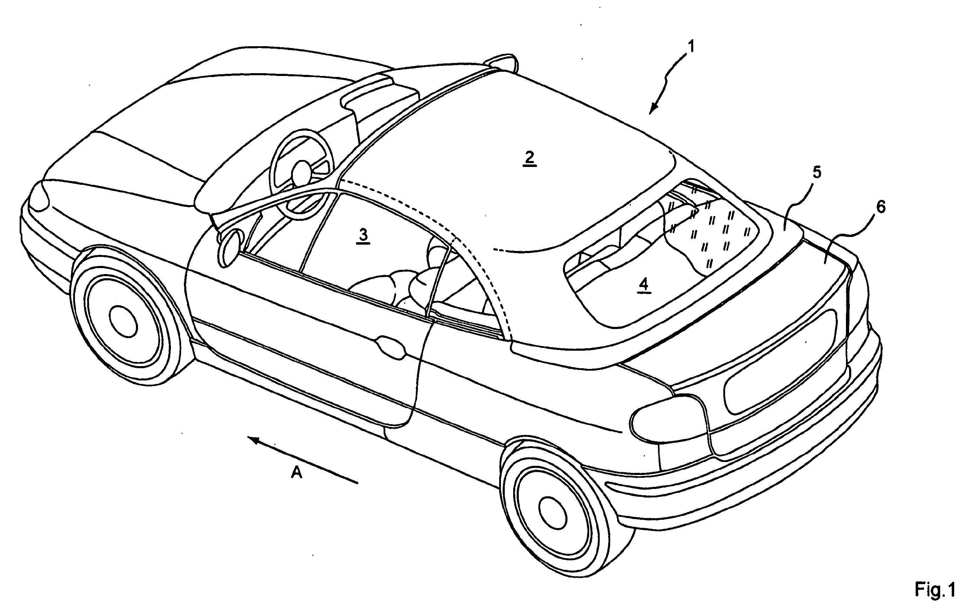

Ein erfindungsgemäßes Cabriolet-Fahrzeug weist ein aus einer Schliessstellung in eine Öffnungsstellung überführbares Verdeck 1 auf, welches zumindest eine Verdeckschicht 2 in Form eines an der Außenseite des Verdecks angeordneten Verdeckbezuges aufweist. In der Figur 1 befindet sich das Verdeck 1 in seiner Geschlossenstellung. Hierbei überdeckt es einen Fahrgastraum 3.

In der nicht gezeigten Öffnungsstellung ist das Verdeck 1 im rückwärtigen Teil des Fahrzeuges unterhalb einer Verdeckkastenabdeckung 4 angeordnet, zu der ein oder mehrere weitere Elemente wie beispielsweise ein Verdeckkastendeckel 5 oder auch Teile des Kofferraumdeckels 6 gehören können. Der Verdeckbezug bzw. die Verdeckschicht 2 werden geführt und gespannt auf einem Verdeckgestänge 7, das aus einer Vielzahl einzelner Gestängeteile besteht. Hierzu gehören mehrere, quer zur Fahrzeuglängsrichtung A verlaufende Spriegel 8. Die Spriegel sind an seitlichen, nicht näher bezifferten Gestängeteilen festgelegt und können hierfür auch seitliche Spriegelteile 9 aufweisen. Diese seitlichen Spriegelteile verlaufen nicht notwendigerweise quer zur Fahrzeuglängsrichtung A und können insbesondere in der nicht gezeigten Öffnungsstellung des Verdeckes auch in nahezu parallel zur Fahrzeuglängsrichtung A verlaufender Ausrichtung im Verdeckkasten angeordnet sein. Begrenzt wird das Verdeckgestänge in Fahrzeuglängsrichtung A nach vorne von einem Dachspitzenteil 10, nach hinten von einem Stoffspannbügel 11.

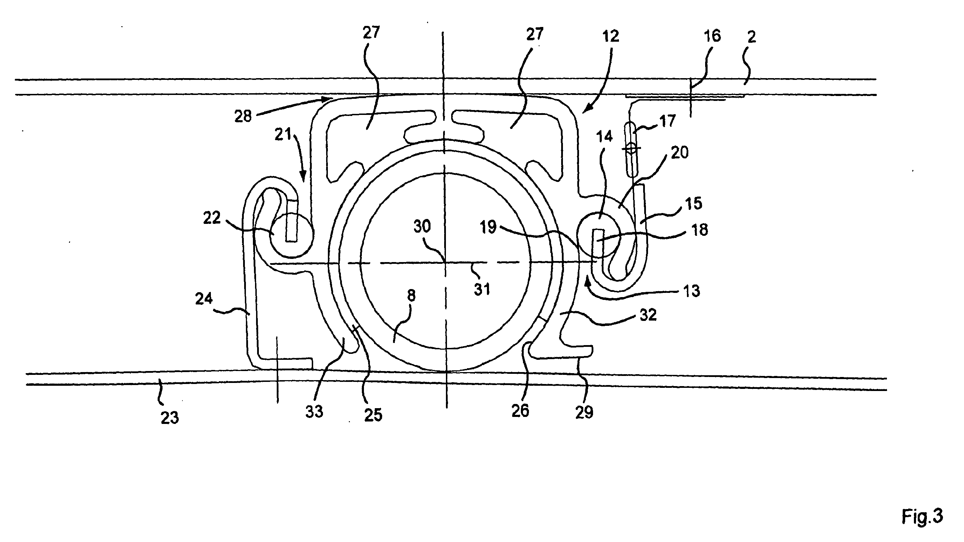

Die Festlegung der ersten Verdeckschicht 2 an dem Spriegel 8 erfolgt über ein Befestigungsprofil 12 (Fig. 3), welches den Spriegel 8 zumindest bereichsweise umgreift. Zur Festlegung dieses Verdeckteils, also hier der ersten Verdeckschicht 2, bildet das Befestigungsprofil einen Befestigungsbereich in Form eines Aufnahmekanals 13 aus. Vorteilhafterweise verjüngt sich der Aufnahmekanal 13 hin zu seiner Öffnung, so dass ein Keder 14, der seinerseits wiederum eine Fahne 15, die der ersten Verdeckschicht zuzuordnen ist, festlegt, sicher in diesem Aufnahmekanal 13 aufnehmbar ist. Es versteht sich, daß zur Festlegung des Verdeckteils das Befestigungsprofil in einer Weiterbildung der Erfindung ggf. auch an anderen Gestängeteilen festgelegt sein kann.

Die Fahne 15 ist hierbei über eine Hochfrequenzschweißnaht 16 mit dem Verdeckbezug aufgrund eines Reißverschlusses 17 lösbar verbunden, was vorteilhaft für Wartung und Montage des Verdeckes 1 ist.

Der Keder 14 besteht aus einem flexiblen Kunststoff und kann daher in den Aufnahmekanal eingedrückt werden. Alternativ hierzu kann er auch bei der Herstellung des Verdecks 1 von der Seite in den Aufnahmekanal 13 eingeschoben werden. Im Bereich des Fahnenendes 18 ist der Keder 14 durch Umspritzen mit der Fahne 15 verbunden.

Begrenzt wird der Aufnahmekanal 13 einerseits von einem Teil der Wandung 19, andererseits durch ein einstückig angeformtes Halteteil 20 und dessen zur Innnenseite des Aufnahmekanals liegender Wandung. Das Halteteil 20 sowie die Wandung 19 bilden somit gemeinsam den Aufnahmekanal 13 aus. Das Befestigungsprofil 12 des erfindungsgemäßen Cabriolet-Fahrzeuges ist so als einstückig extrudiertes Kunststoffprofil hergestellbar. Eine Herstellung aus anderen Materialien ist in Abhängigkeit der Herstellungskosten und Materialeigenschaften ebenfalls denkbar.

Bei dem erfindungsgemäßen Cabriolet-Fahrzeug ist das als Klemmprofil ausgebildete Befestigungsprofil 12 an einem runden Spriegel 8 angeordnet, an dem so auch ohne diesen mit Aufnahmekanälen zu versehen Teile des Verdecks 1 festgelegt werden können.

Vorteilhafterweise weist das erfindungsgemäße Cabriolet-Fahrzeug ein Befestigungsprofil mit zumindest einem weiteren Aufnahmekanal 21 auf, der auf gleiche Art und Weise ausgebildet ist wie der Aufnahmekanal 13. In diesem ist ein Keder 22 festgelegt, der über eine einer weiteren Verdeckschicht 23, die den Innenhimmel des Cabriolet-Fahrzeugs darstellt, zuzuordnenden Fahne 24 mit dem Innenhimmel verbunden ist. Besonders vorteilhaft sind die Aufnahmekanäle 13, 21 betrachtet von Ihrer Basis zur Öffnung hin zu verschiedenen Seiten hin geöffnet. Dieses bringt Vorteile für die Befestigung unterschiedlicher Verdeckteile mit sich. Das Befestigungsprofil 12 umgreift den runden Spriegel 8 zumindest halbseitig. Gleichzeitig sind die Klemmkräfte des Befestigungsprofils 12 ausreichend, um auch ohne eine Klebezwischensicht 25 eine ausreichende Befestigung des Verdeckbezuges und des Innenhimmels an dem Spriegel 8 zu gewährleisten. Die Klebezwischensicht 25 kann diese Befestigung jedoch weiter verstärken.

Es gereicht der Erfindung zum Vorteil, das Befestigungsprofil 12 mit einer der Form des runden Spriegels 8, komplementären Innenseite 26 auszubilden, um den Anlagebereich zu vergrößern und somit eine bessere Befestigung des Befestigungsprofils 12 und damit der Verdeckschichten 2 und 23 sowie gegebenenfalls weiterer Verdeckschichten zu gewährleisten.

Es ist jedoch hierbei nicht notwendig, den Spriegel auf der gesamten Innenseite 26 des Befestigungsprofils 12 mit diesem in Anlage zu bringen. Insbesondere werden durch die unterbrochene Anlage zwei Hohlräume 27, die innenseitig des Befestigungsprofils 12 zwischen einer äußeren Anlagefläche 28 und dem Spriegel 8 vorgesehen sind, geschaffen. Diese Hohlräume 27 können zur Geräusch- und/oder Wärmedämmung verwendet werden und hierfür gegebenenfalls mit einem entsprechenden Material gefüllt sein. Gleichzeitig ist es auch denkbar, die Hohlräume 27 als geschlossene Hohlräume direkt in das Kunststoffprofil zu integrieren.

Nach der Fig. 3 ist der Außenbezug des Verdeckes 1 in Kontakt mit der Anlagefläche 28 des Befestigungsprofils, während der Innenhimmel bzw. die weitere Verdeckschicht 23 in Anlage mit dem Spriegel 8 gelangen kann. Die Anlagefläche 28 ist hierbei so geformt, dass sie sich vorteilhafterweise nicht oder nur wenig auf der Verdeckschicht abzeichnet. Hierzu weist die Fläche 28 beispielsweise gerundete Kanten auf. Alternativ ist es denkbar, das Befestigungsprofil 12 auf seiner in der Figur rechten Seite weiter nach unten zu verlängern und durch einen Außenseitenbereich 29 eine weitere Anlagefläche für den Innenhimmel zu schaffen.

Der Anlagebereich 28 befindet sich im Uhrzeigersinn an der Außenseite des Befestigungsprofils 12 entlang betrachtet zwischen den Aufnahmekanälen 13 und 21. Insbesondere bei einer Ausbildung des Aufnahmekanals 21 zu der in der Figur gezeigten unteren Seite hin kann durch eine beidseitig der Anlagefläche 28 gegebene Befestigungsmöglichkeit die äußere Verdeckschicht 2 fest anliegen, ohne für eventuelle Öffnungs- und Schließvorgänge des Verdecks 1 zu fest mit dem Befestigungsprofil 12 verbunden zu sein. Erfindungsgemäß ist es weiterhin denkbar, dass die Aufnahmekanäle durch einen Teil des Profils ausgebildet werden, der auf einem Steg beabstandet von dem Rest des Befestigungsprofils zu den Seiten hin absteht. Auch hierbei können mehr als ein Aufnahmekanal pro Seite ausgebildet werden, was die Anzahl der Befestigungsmöglichkeiten an dem erfindungsgemäßen Befestigungsprofil 12 weiterhin erhöht.

Bezogen auf eine durch eine Mittelachse 30 des Spriegels 8 verlaufende und parallel zur Verdeckschicht 2 bzw. 23 ausgebildete Ebene 31 befinden sich die Aufnahmekanäle 13 und 21 zumindest im wesentlichen auf der Seite des Anlagebereichs bzw. der Anlagefläche 28 und somit in einem auf das Befestigungsprofil 12 bezogenen unteren Ende desselben. Eine Aufspreizung des Befestigungsprofils 12 durch zu weit an den Enden von dünn ausgebildeten Profilschenkeln 32 und 33 angeordnete Aufnahmekanäle wird hierdurch vermieden.

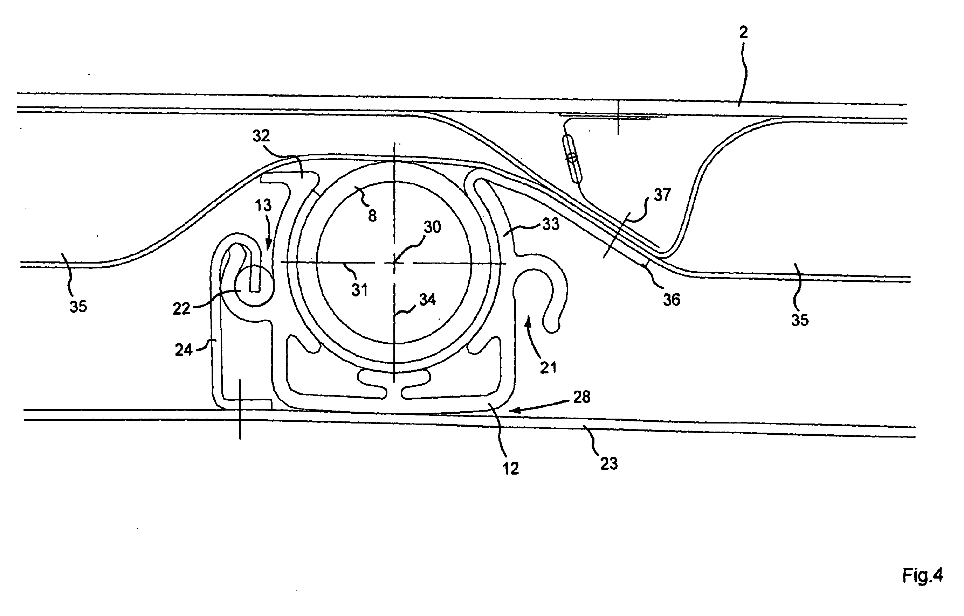

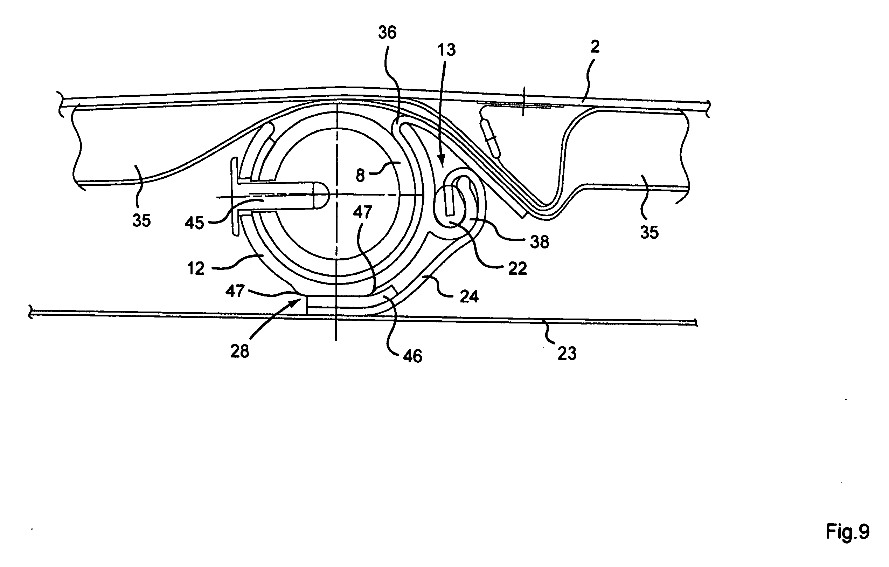

Sehr vorteilhaft für das erfindungsgemäße Cabriolet ist weiterhin, dass das Befestigungsprofil zumindest in zwei, insbesondere die Anbringung unterschiedlicher Verdeckteile ermöglichende Positionen, an dem Spriegel festlegbar ist. Dies kommt insbesondere auch dann zum Tragen, wenn das Befestigungsprofil 12 nur einen Aufnahmekanal 13 auf einer Seite, bezogen auf eine Vertikale 34 durch die Mittelachse 30 des Spriegels, aufweist (vgl. Fig. 9). Ersichtlich weisen die Öffnungen der Aufnahmekanäle 13, 21 des Befestigungsprofils 12 nach Fig. 4, das dem Befestigungsprofil der Fig. 3 entspricht, in einer Ausbildung mit zwei Aufnahmekanälen 13, 21 vorteilhafterweise in verschiedene Richtungen. Das Befestigungsprofil 12 wurde hierfür um 180° um den Spriegel 8 gedreht.

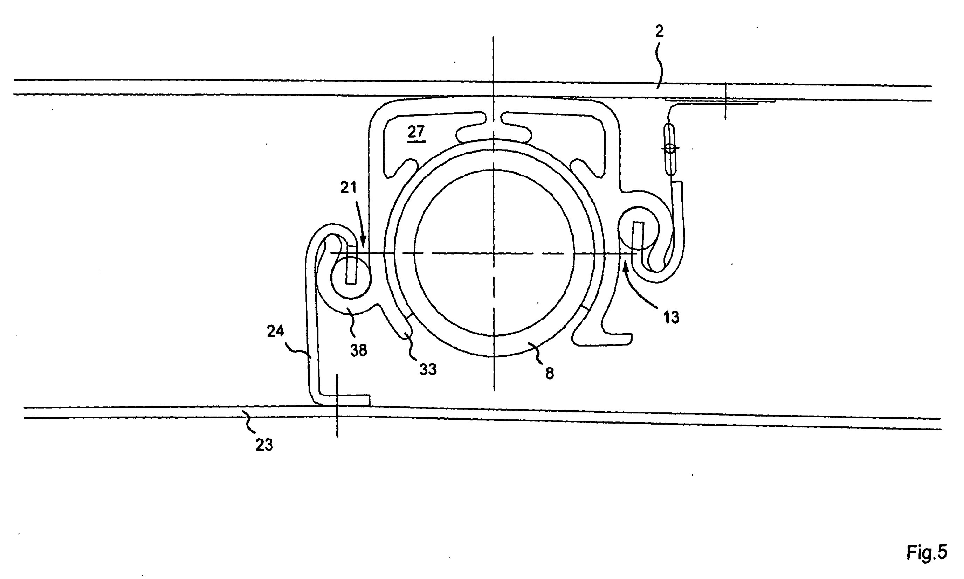

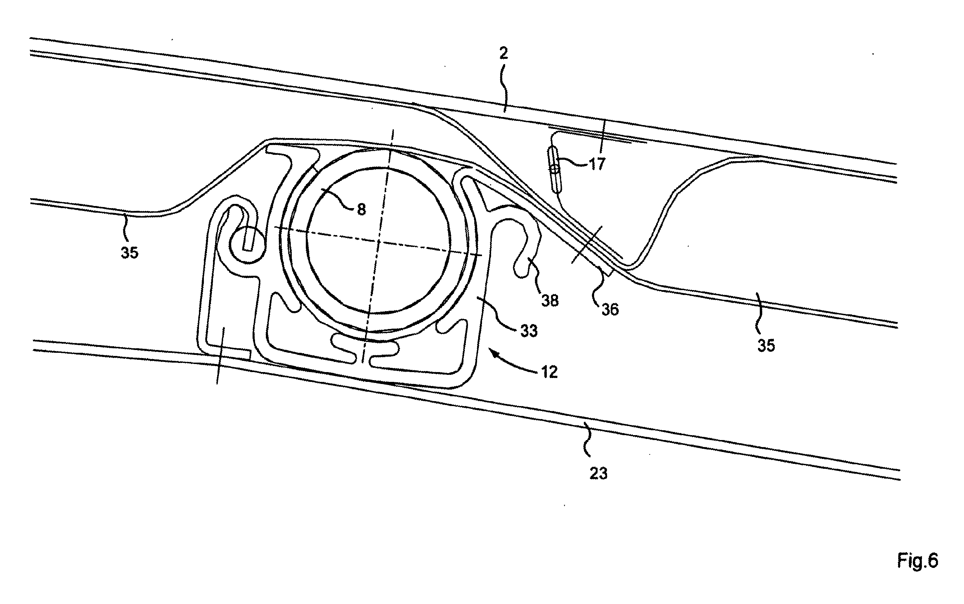

Bei dem erfindungsgemäßen Cabriolet-Fahrzeug ist der Abstand der in Anlage mit dem Befestigungsprofil 12 befindlichen Verdeckschicht 23 zumindest in etwa identisch zu dem Abstand der nicht in direkter Anlage mit dem Befestigungsprofil 12 befindlichen Verdeckschicht 2 zum Spriegel 8 (Fig. 4). Der in der Fig. 3 vom Spriegel 12 zum Verdeckbezug 2 gehaltene minimale Abstand wird in der Fig. 4 von einer Polstermatte 35 genutzt bzw. ausgefüllt, ohne dass sich die Höhe der äußeren Verdeckschicht über dem Spriegel ändert. Das Klemmprofil bzw. Befestigungsprofil 12 kann somit für den optionalen Verbau einer durchgehenden, oberhalb oder auch unterhalb der Spriegel 8 verlaufenden Polstermatte 35 verwendet werden. Insbesondere die oberhalb des Spriegels 8 angeordnete Polstermatte 35 führt dazu, dass keine oder nur geringe Abdrücke des Spriegels 8 von außen zu sehen sind. Weiterhin können Zuschnittsänderungen an dem Verdeckstoff entfallen. Für den identischen Zuschnitt des Innenhimmels nach Fig. 4 wäre die Fahne 24 in Fig. 3 zu verkürzen. Nach den Abbildungen der Fig. 5 und 6 sind die Zuschnitte des Verdeckbezuges (2) und des Innenhimmels 23 in beiden Befestigungspositionen des Spriegels 12 identisch.
Bei verschiedenen Ausführungsformen oder verschiedenen Spriegeln 8 eines erfindungsgemäßen Cabriolet-Fahrzeugs kann somit dasselbe Befestigungsprofil 12 für unterschiedliche Verdecksituationen mit oder ohne Polstermatte bei gleichen Verdeckzuschnitten verwendet werden.

Je nach gewünschtem Innenhimmelzuschnitt kann der Innenhimmel gegebenenfalls auch stärker beabstandet an dem Profil 12 gehalten werden, solange der oberhalb des Spriegels 8 befindliche Abstand für die optionale Anordnung einer Polstermatte ausreicht. Durch geschickte Anordnung der Aufnahmekanäle 13, 21 kann die an dem Innenhimmel verwendete Fahne 24 auch in der gedrehten Situation verwendet werden (Fig. 5,6), während die Fahnen 24 der Fig. 3 und 4 unterschiedliche Längen aufweisen.

Anstatt der Befestigung in einem Aufnahmekanal 13 kann das Befestigungsprofil 12 in seiner Ausbildung als Klemmprofil auch eine um den Spriegel 8 herum gelegte und von dem Klemmprofil festgeklemmte, gegebenenfalls als Klebezwischenschicht dienende Fahne 36 festlegen. An dieser Fahne ist durch eine Nähverbindung 37 sowohl die Polstermatte 35 als auch der Verdeckbezug (Verdeckschicht 2) festgelegt. Alternativ kann die Polstermatte auch in dem Aufnahmekanal 21 festgelegt werden.

Das Befestigungsprofil 12 ist somit als Multifunktionsprofil ausgebildet, das zwei oder mehr einer Reihe von Funktionen erfüllen kann: Festlegung von einem oder mehreren Verdeckteilen in einer ersten Position durch Ausbildung von Aufnahmekanälen 13, 21 für Keder, durch Einklemmen einer Fahne und/oder einer direkten Anbindung des Verdeckstoffes an dem Befestigungsprofil 12, Anlage von Verdeckteilen und Beabstandung der Verdeckteile vom Spriegel 8. Außerdem kann durch die variable Anordnung des Befestigungsprofils 12 an dem Spriegel 8 eine alternative Anbringung weiterer oder derselben Verdeckteile vorgesehen sein.

Der Vergleich der Figuren 5 und 6 mit den Figuren 3 und 4 offenbart ebenfalls ein in unterschiedlichen Positionen an dem Spriegel 8 festlegbares Befestigungsprofil 12. Bei diesem (Fig. 5) ist aufgrund der Anordnung einer Anformung 38 am Profilschenkel 33 der Aufnahmekanal 21 weiter zum Ende des Profilschenkels 33 hin verschoben. Bei identischer Länge der Fahne 24 wird somit bereits in der in Fig. 5 gezeigten Anordnung ein gleicher Abstand zwischen Spriegel 8 und äußerer Verdeckschicht 2 und Spriegel 8 und innerer Verdeckschicht 23 hergestellt. Die in Fig. 6 gedrehte Anordnung des Befestigungsprofils 12 führt zu der ebenfalls bereits in der Fig. 4 beschriebenen Anordnung der Polstermatte 35, ohne dass sich die Zuschnitte der Verdeckschichten ändern müssen. Vorteilhafterweise dient eine Außenseite der Anformung 38 als Anlage bzw. Führungsfläche für die Fahne 36.

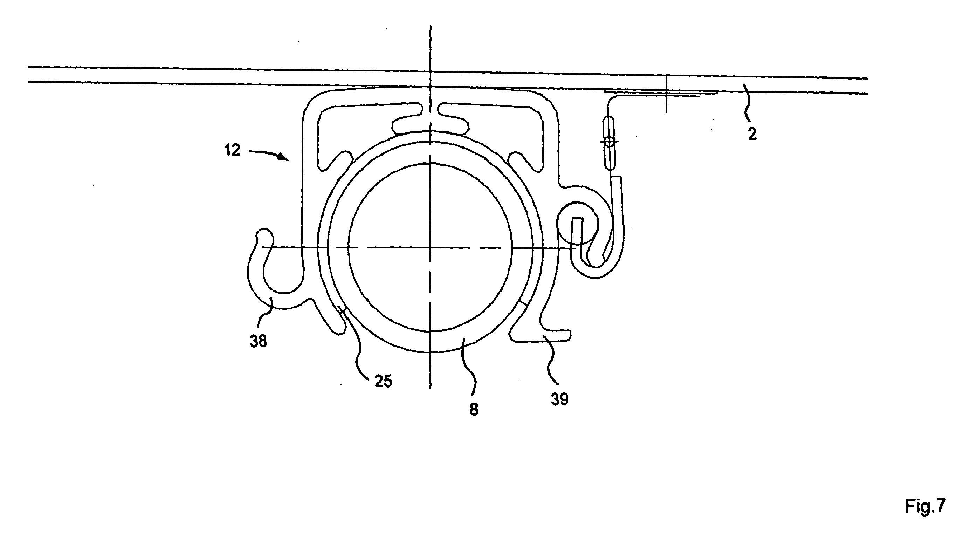

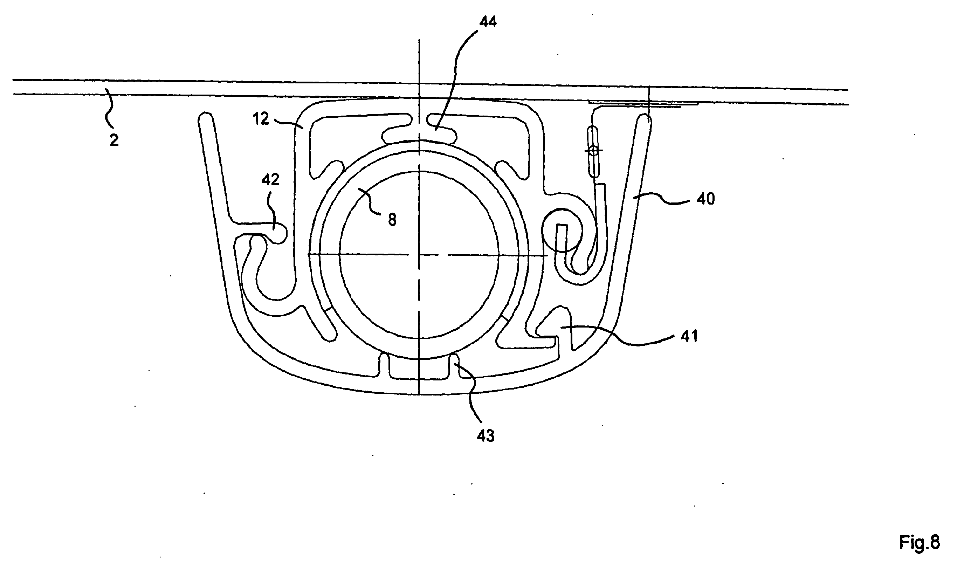

Die beabstandete Anlage einer äußeren Verdeckschicht 2, die mittels des Befestigungsprofils 12 an dem Rohrspriegel 8 ohne weitere Verdeckschichten befestigt wird, ist oft bei einfacheren Verdecken gewünscht und in Fig. 7 gezeigt. Die in dieser Figur nicht weiter verwendeten Anformung 39 bzw. die dem Halteteil 20 entsprechende Anformung 38 dienen gemäß Fig. 8 der Festlegung einer vorzugsweise aus einem Kunststoff oder aus Aluminium bestehenden Spriegelabdeckung 40, die zumindest teilweise den Spriegel 8 und das Befestigungsprofil 12 umfasst und beispielsweise der Innenverkleidung dienen kann. Die Spriegelabdeckung 40 ist an der sich im wesentlichen über die Länge des Befestigungsprofils 12 erstreckenden Anformung 39 mittels eines nasenförmigen Haltesteges 41 einerseits und andererseits über einen zum Ende hin mit einem Wulst versehenen, weiteren Haltesteg 42 festgelegt. Diese Spiegelabdeckung 40 bringt bei einer vorteilhaften Ausgestaltung der Erfindung eine zusätzliche Klemmkraft auf, wodurch das Befestigungsprofil 12 weiterhin festgelegt wird. Über Abstandsstege 43 liegt die Spriegelabdeckung 40 an dem Spriegel 8 an. Hierfür ist ebenfalls ein auf der anderen Seite des Spriegels 8 befindliche Abstandsflansch 44 des Befestigungprofils 12 vorgesehen.

Das Befestigungsprofil 12 gemäß Fig. 7 kann anstelle der Klebeschicht 25 eine Reibung vermindernde Schicht aufweisen und so schwenkbar um den Spriegel 8 herum festgelegt werden. die Befestigungsanordnung des erfindungsgemäßen Cabriolet-Fahrzeugs erhält dadurch zur Überführung des Verdecks 1 in verschiedene Verdeckstellungen mehr Freiheitsgrade.

Das Befestigungsprofil 12 eines weiteren erfindungsgemäßen Cabriolet-Fahrzeugs gemäß Fig. 9 weist einen Aufnahmekanal auf einer Seite des Spriegels 8 auf. Die außenseitige Verdeckschicht 2 ist zusammen mit der auf beiden Seiten des Spriegels 8 angeordneten Polstermatte 35 mittels der Fahne 36 an dem Spriegel 8 befestigt. Die Fahne 36 wird einerseits durch das als Klemmprofil ausgebildete Befestigungsprofil 12, andererseits zusätzlich durch einen Niet 45 am Spriegel befestigt. Der Niet 45 dient gleichzeitig noch der Festlegung des Befestigungsprofils 12 am Spriegel 8.

Mittels eines in den durch eine Anformung 38 nun nach oben offenen Aufnahmekanal 13 eingebrachten Keders 22 samt Fahne 24 ist die weitere, innere Verdeckschicht 23 unter gleichzeitiger Verwendung eines Anzugstreifens 46 festgelegt. Die Anlagefläche 28, die in dem Ausführungsbeispiel nach Fig. 9 ersichtlich durch Verdickungen 47 des Befestigungsprofils 12 mit ausgebildet wird, weist auf der Innenseite des Profils 12 keine Hohlräume auf. Somit ist die Anlagefläche 28 nach Figur 9 zumindest teilweise nicht extra von dem Spriegel 8 beabstandet wie die besonders vorteilhaften Anlageflächen 28 der übrigen Abbildungen.

## Patentansprüche

1. Cabriolet-Fahrzeug mit einem aus einer Schliessstellung in eine Öffnungsstellung überführbaren Verdeck (1), welches zumindest eine Verdeckschicht (2) und ein Verdeckgestänge (7) mit wenigstens einem quer zur Fahrzeuglängsrichtung verlaufenden Spriegel (8) aufweist, den ein Befestigungsprofil (12) zumindest bereichsweise umgreift, wobei das Befestigungsprofil (12) zur Festlegung zumindest eines Verdeckteils (2, 23, 35, 40) wenigstens einen Befestigungsbereich in Form eines Aufnahmekanals (13, 21) ausbildet, der sich zumindest teilweise längs des Befestigungsprofils (12) erstreckt und entlang seiner Längserstreckung geöffnet ist
**dadurch gekennzeichnet, dass**
das Befestigungsprofil (12) zumindest in zwei Positionen an dem Spriegel (8) anordenbar ist, so dass weitere oder dieselben Verdeckteile (2, 23, 35) alternativ an dem Befestigungsprofil (12) anbringbar sind.

2. Cabriolet-Fahrzeug nach Anspruch 1,
**dadurch gekennzeichnet, dass**
sich der Aufnahmekanal (13, 21) des Befestigungsprofils (12) zu seiner Öffnung hin verjüngt.

3. Cabriolet-Fahrzeug nach Anspruch 1 oder 2,
**dadurch gekennzeichnet, dass**
der Aufnahmekanal (13, 21) von einer Wandung (19) des Befestigungsprofils (12) begrenzt ist.

4. Cabriolet-Fahrzeug nach einem der Ansprüche 1 bis 3 mit zumindest zwei Aufnahmekanälen (13, 21),
**dadurch gekennzeichnet, dass**
die Aufnahmekanäle (13, 21) zu verschiedenen Seiten hin geöffnet sind.

5. Cabriolet-Fahrzeug nach einem der Ansprüche 1 bis 4,
**dadurch gekennzeichnet, dass**
das Befestigungsprofil (12) den Spriegel (8) zumindest halbseitig umgreift.

6. Cabriolet-Fahrzeug nach einem der Ansprüche 1 bis 5,
**dadurch gekennzeichnet, dass**
das Befestigungsprofil (12) zur Festlegung an einem im Querschnitt im wesentlichen runden Spriegel (8) mit einer zumindest teilweise komplementären Innenseite (26) ausgebildet ist.

7. Cabriolet-Fahrzeug nach einem der Ansprüche 1 bis 6,
**dadurch gekennzeichnet, dass**
das Befestigungsprofil (12) außenumfangsseitig eine vom Spriegel beabstandete Anlagefläche (28) für die Verdeckschicht (2, 23) aufweist.

8. Cabriolet-Fahrzeug nach Anspruch 7,
**dadurch gekennzeichnet, dass**
der zumindest eine Aufnahmekanal (13, 21) bezogen auf eine durch eine Mittelachse (30) des Spriegels (8) verlaufene und in etwa parallel zur Verdeckschicht (2, 23) ausgebildete Ebene (31) auf der Seite der Anlagefläche (28) angeordnet ist.

9. Cabriolet-Fahrzeug nach einem der Ansprüche 7 oder 8 mit zumindest zwei Aufnahmekanälen (13, 21),
**dadurch gekennzeichnet, dass**
die Anlagefläche (28) außenseitig zwischen zwei Aufnahmekanälen (13, 21) angeordnet ist.

10. Cabriolet-Fahrzeug nach einem der Ansprüche 7 bis 9,
**dadurch gekennzeichnet, dass**
das Befestigungsprofil (12) im Bereich zwischen Anlagefläche (28) und Spriegel (8) zumindest einen insbesondere der Geräusch- und/oder Wärmedämmung dienenden Hohlraum (27) aufweist.

11. Cabriolet-Fahrzeug nach einem der Ansprüche 7 bis 10, mit zumindest einer weiteren Verdeckschicht (23),
**dadurch gekennzeichnet, dass**
der Abstand der in Anlage mit dem Befestigungsprofil (12) befindlichen Verdeckschicht (23) zum Spriegel (8) dem Abstand der nicht in direkter Anlage mit dem Befestigungsprofil (12) befindlichen Verdeckschicht (2) zum Spriegel (8) entspricht.

12. Cabriolet-Fahrzeug nach einem der Ansprüche 1 bis 11,
**dadurch gekennzeichnet, dass**
das Befestigungsprofil (12) ein Klemmprofil ist.

13. Cabriolet-Fahrzeug nach Anspruch 12,
**dadurch gekennzeichnet, dass**
das Klemmprofil zumindest eine zwischen Spriegel (8) und Klemmprofil angeordnete Fahne (36) festlegt.

14. Cabriolet-Fahrzeug nach einem der Ansprüche 1 bis 13
**dadurch gekennzeichnet, dass**
der Aufnahmekanal (13, 21) des Befestigungsprofils (12) durch ein einstückig angeformtes Halteteil (20, 38) gebildet wird.

15. Cabriolet-Fahrzeug nach einem der Ansprüche 1 bis 14,
**dadurch gekennzeichnet, dass**
das Befestigungsprofil (12) zumindest in zwei die Anbringung unterschiedlicher Verdeckteile (2, 23, 35) ermöglichende Positionen an dem Spriegel (8) festlegbar ist.

16. Cabriolet-Fahrzeug nach einem der Ansprüche 1 bis 15,
**dadurch gekennzeichnet, dass**
das Verdeck (1) eine Spriegelabdeckung (40) aufweist, die zumindest teilweise den Spriegel (8) und das Befestigungsprofil (12) umfaßt.

17. Cabriolet-Fahrzeug nach Anspruch 16,
**dadurch gekennzeichnet, dass**
die Spriegelabdeckung (40) an zumindest einer sich im wesentlichen über die Länge des Spriegels (8) erstreckenden Anformung (39) festlegbar ist.

18. Cabriolet-Fahrzeug nach Anspruch 16 oder 17,
**dadurch gekennzeichnet, dass**
die Spriegelabdeckung (40) das Befestigungsprofils (12) mit einer Klemmkraft beaufschlagt.

19. Cabriolet-Fahrzeug nach einem der Ansprüche 1 bis 18,
**dadurch gekennzeichnet, dass**
das Befestigungsprofil (12) entlang des Spriegels (8) nur abschnittsweise mit Befestigungsbereichen versehen ist.

20. Cabriolet-Fahrzeug nach einem der Ansprüche 1 bis 19,
**dadurch gekennzeichnet, dass**
das Befestigungsprofil (12) schwenkbar an dem Spriegel (8) festgelegt ist.

21. Cabriolet-Fahrzeug nach einem der Ansprüche 1 bis 20,
**dadurch gekennzeichnet, dass** die Verdeckschicht (23) direkt an dem Befestigungsprofil (12) festgelegt ist.

## Claims

1. A convertible vehicle with a hood (1) that can be moved from a closed position into an open position and comprises at least one hood layer (2) and a hood linkage (7) with at least one bow (8) extending transversely to the longitudinal vehicle direction, with a fastening profile (12) engaging at least partially around said bow (8), said fastening profile (12) forming at least one fastening area in the form of a receiving channel (13, 21) for fixing at least one hood part (2, 23, 35, 40), said receiving channel (13, 21) extending at least partially lengthwise along the fastening profile (12) and being open along its longitudinal extension,
**characterised in that**
the fastening profile (12) can be arranged in at least two positions on the bow (8), so that additional or the same hood parts (2, 23, 35) can be attached alternatively to the fastening profile (12).

2. The convertible vehicle according to claim 1, **characterised in that** the receiving channel (13, 21) of the fastening profile (12) tapers towards its opening.

3. The convertible vehicle according to claim 1 or 2, **characterised in that** the receiving channel (13, 21) is limited by a wall (19) of the fastening profile (12).

4. The convertible vehicle according to any one of claims 1 to 3, comprising at least two receiving channels (13, 21), **characterised in that** the receiving channels (13, 21) are open towards different sides.

5. The convertible vehicle according to any one of claims 1 to 4, **characterised in that** the fastening-profile (12) engages at least half-way around the bow (8).

6. The convertible vehicle according to any one of claims 1 to 5, **characterised in that**, in order to be fixed to a bow (8) with a substantially round cross-section, the fastening profile (12) is provided with an at least partially complementary inner surface (26).

7. The convertible vehicle according to any one of claims 1 to 6, **characterised in that** the fastening profile (12) comprises, along its outer circumference and spaced-apart from the bow, a contact surface (28) for the hood layer (2, 23).

8. The convertible vehicle according to claim 7, **characterised in that** the at least one receiving channel (13, 21) is arranged on the side of the contact surface (28), with respect to a plane (31) that extends through a central axis (30) of the bow (8) and is approximately parallel to the hood layer (2, 23).

9. The convertible vehicle according to any one of claims 7 or 8, comprising at least two receiving channels (13, 21), **characterised in that** the contact surface (28) is arranged externally between two receiving channels (13, 21).

10. The convertible vehicle according to any one of claims 7 to 9, **characterised in that** the fastening profile (12) comprises, in the region between the contact surface (28) and the bow (8), at least one hollow space (27) which serves, in particular, for noise and/or thermal insulation.

11. The convertible vehicle according to any one of claims 7 to 10, comprising at least one additional hood layer (23), **characterised in that** the distance from the hood layer (23) contacting the fastening profile (12) to the bow (8) corresponds to the distance from the hood layer (2) not directly contacting the fastening profile (12) to the bow (8).

12. The convertible vehicle according to any one of claims 1 to 11, **characterised in that** the fastening profile (12) is a clamping profile.

13. The convertible vehicle according to claim 12, **characterised in that** the clamping profile fixes at least one lug (36) arranged between the bow (8) and the clamping profile.

14. The convertible vehicle according to any one of claims 1 to 13, **characterised in that** the receiving channel (13, 21) of the fastening profile (12) is formed by an integrally moulded-on retaining element (20, 38).

15. The convertible vehicle according to any one of claims 1 to 14, **characterised in that** the fastening profile (12) can be fixed to the bow (8) in at least two positions enabling the attachment of different hood parts (2, 23, 35).

16. The convertible vehicle according to any one of claims 1 to 15, **characterised in that** the hood (1) comprises a bow cover (40) which extends at least partially around the bow (8) and the fastening profile (12).

17. The convertible vehicle according to claim 16, **characterised in that** the bow cover (40) can be fixed to at least one moulding (39) which extends substantially over the length of the bow (8).

18. The convertible vehicle according to claim 16 or 17, **characterised in that** the bow cover (40) subjects the fastening profile (12) to a clamping force.

19. The convertible vehicle according to any one of claims 1 to 18, **characterised in that** the fastening profile (12) is provided with fastening areas only in some portions along the bow (8).

20. The convertible vehicle according to any one of claims 1 to 19, **characterised in that** the fastening profile (12) is fixed to the bow (8) in a pivoting manner.

21. The convertible vehicle according to any one of claims 1 to 20, **characterised in that** the hood layer (23) is fixed directly to the fastening profile (12).

## Revendications

1. Véhicule cabriolet avec une capote (1) qui est déplaçable d'une position fermée vers une position ouverte et comprend au moins une couche de capote (2) et une tringlerie de capote (7) avec au moins un arceau (8) s'étendant transversalement à la direction longitudinale du véhicule, un profilé de fixation (12) s'étendant au moins partiellement autour dudit arceau (8), ledit profilé de fixation (12) constituant au moins une région de fixation sous forme d'un canal de logement (13, 21) pour fixer au moins un élément de capote (2, 23, 35, 40), ledit canal de logement (13, 21) s'étendant au moins partiellement le long du profilé de fixation (12) et étant ouvert selon son extension longitudinale,
**caractérisé en ce que**
le profilé de fixation (12) peut être disposé dans au moins deux positions sur l'arceau (8) de manière à permettre le montage alternatif d'éléments de capote (2, 23, 35) additionnels ou identiques sur le profilé de fixation (12).

2. Véhicule cabriolet selon la revendication 1, **caractérisé en ce que** le canal de logement (13, 21) du profilé de fixation (12) s'amincit vers son ouverture.

3. Véhicule cabriolet selon la revendication 1 ou 2, **caractérisé en ce que** le canal de logement (13, 21) est limité par une paroi (19) du profilé de fixation (12).

4. Véhicule cabriolet selon l'une quelconque des revendications 1 à 3 avec au moins deux canaux de logement (13, 21), **caractérisé en ce que** les canaux de logement (13, 21) sont ouverts vers des côtés différents.

5. Véhicule cabriolet selon l'une quelconque des revendications 1 à 4, **caractérisé en ce que** le profilé de fixation (12) s'étend autour au moins la moitié de l'arceau (8).

6. Véhicule cabriolet selon l'une quelconque des revendications 1 à 5, **caractérisé en ce que** le profilé de fixation (12) présente, pour sa fixation à un arceau (8) de section transversale sensiblement ronde, une face intérieure (26) au moins partiellement complémentaire.

7. Véhicule cabriolet selon l'une quelconque des revendications 1 à 6, **caractérisé en ce que** le profilé de fixation (12) présente sur sa circonférence extérieure une face de contact (28), écartée de l'arceau, pour la couche de capote (2, 23).

8. Véhicule cabriolet selon la revendication 7, **caractérisé en ce que**, par rapport à un plan (31) qui traverse un axe central (30) de l'arceau (8) et est approximativement parallèle à la couche de capote (2, 23), l'au moins un canal de logement (13, 21) est disposé du côté de la face de contact (28).

9. Véhicule cabriolet selon l'une quelconque des revendications 7 ou 8 avec au moins deux canaux de logement (13, 21), **caractérisé en ce que** la face de contact (28) est disposée extérieurement entre les deux canaux de logement (13, 21).

10. Véhicule cabriolet selon l'une quelconque des revendications 7 à 9, **caractérisé en ce que** le profilé de fixation (12) présente, dans la région entre la face de contact (28) et l'arceau (8), au moins un espace vide (27) qui sert notamment à la réduction du bruit et/ou à l'isolation thermique.

11. Véhicule cabriolet selon l'une quelconque des revendications 7 à 10 avec au moins une couche de capote (23) additionnelle, **caractérisé en ce que** la distance de la couche de capote (23) en contact avec le profilé de fixation (12) jusqu'à l'arceau (8) est égale à la distance de la couche de capote (2) non pas en contact directe avec le profilé de fixation (12) jusqu'à l'arceau (8).

12. Véhicule cabriolet selon l'une quelconque des revendications 1 à 11, **caractérisé en ce que** le profilé de fixation (12) est un profilé de serrage.

13. Véhicule cabriolet selon la revendication 12, **caractérisé en ce que** le profilé de serrage fixe au moins une languette (36) disposée entre l'arceau (8) et le profilé de serrage.

14. Véhicule cabriolet selon l'une quelconque des revendications 1 à 13, **caractérisé en ce que** le canal de logement (13, 21) du profilé de fixation (12) est constitué par un élément de retenu (20, 38) surmoulé en une seule pièce.

15. Véhicule cabriolet selon l'une quelconque des revendications 1 à 14, **caractérisé en ce que** le profilé de fixation (12) peut être fixé sur l'arceau (8) dans au moins deux positions permettant le montage de différents éléments de capote (2, 23, 35).

16. Véhicule cabriolet selon l'une quelconque des revendications 1 à 15, **caractérisé en ce que** la capote (1) comprend un recouvrement d'arceau (40) qui s'étend au moins partiellement autour de l'arceau (8) et du profilé de fixation (12).

17. Véhicule cabriolet selon la revendication 16, **caractérisé en ce que** le recouvrement d'arceau (40) peut être fixé sur au moins une moulure (39) qui s'étend sensiblement sur toute la longueur de l'arceau (8).

18. Véhicule cabriolet selon la revendication 16 ou 17, **caractérisé en ce que** le recouvrement d'arceau (40) soumet le profilé de fixation (12) à une force de serrage.

19. Véhicule cabriolet selon l'une quelconque des revendications 1 à 18, **caractérisé en ce que** le profilé de fixation (12) présente des régions de fixation seulement dans quelques parties de l'arceau (8).

20. Véhicule cabriolet selon l'une quelconque des revendications 1 à 19, **caractérisé en ce que** le profilé de fixation (12) est fixé sur l'arceau (8) de manière basculante.

21. Véhicule cabriolet selon l'une quelconque des revendications 1 à 20, **caractérisé en ce que** la couche de capote (23) est fixé directement sur le profilé de fixation (12).
